# EUROPEAN PATENT APPLICATION

(11) **EP 1 024 441 A2**
(43) Date of publication of application: **02.08.2000**
(21) Application number: 00300614.5
(22) Date of filing: 27.01.2000
(51) Int. Cl.: G06F 17/30

(54) **Method and apparatus for synchronizing multiple databases**

(30) Priority: 27.01.1999 US 239039
(71) Applicant: Phone.Com, Inc., Redwood City, CA 94063 (US)
(72) Inventor: Bracey, David E., Los Gatos, CA 95014 (US)
(74) Representative: Ablett, Graham Keith

(57) **Abstract**

A database synchronization system is disclosed. In the database synchronization system, a synchronization database (355) is created. The synchronization database stores a relative sent time that specifies when each database last attempted to send records to each other database, a relative receive time that specifies when each database last attempted to received records from each other database, and a relative record modified time that specifies when each record in each database was last created or modified. The synchronization system operates by comparing each record modified time to the relative sent time and the relative receive time. Records are only sent from a first database (31 5) to a second database (325) if the relative record modified time for that record designates a later time than the relative sent time that specifies when the first database last sent records to the second database and the relative record modified time specifies an earlier time than the relative receive time that specifies the time the first database last received records from the second database. To eliminate possible loops, identical records are discarded.

## Description

### FIELD OF THE INVENTION

The present invention relates to the field of database coherency in computer systems. In particular the present invention discloses a synchronization system that keeps a plurality of different database synchronized.

### BACKGROUND OF THE INVENTION

More and more people are relying upon computer devices to organize their lives. For example, many people use computer systems to maintain personal information such as telephone number & address lists, to-do lists, and a personal daily planner. Many people store this personal information on personal information management application programs on desktop personal computers. However, when such people are away from their personal computers this valuable personal information is not available since it is stored in the desktop personal computer system.

One method of making this personal information available at other locations is to put the personal information onto a server coupled to the Internet. To protect the personal information, the server may require that a user authenticate himself before the server provides access to the personal information. One Internet web site is currently offering personal information storage on the Internet as a free service. (See http://www.planetall.com/) However, to access personal information stored on an Internet server, a person must still have access to the Internet.

Another method of making personal information accessible is to place the personal information on a handheld computer system. To provide this functionality, a new class of portable handheld computer systems has emerged. For example, the 3Com PalmPilot, the 3Com Palm III, and Windows CE based Palm-sized personal computers all provide applications for storing personal information.

When a person uses more than one of these personal information storage systems (personal computer applications, Internet servers, handheld computer systems, etc.), the person needs to keep the personal information storage systems synchronized such that the same data is available in all the different storage systems. Some systems have addressed having two personal information systems synchronized. For example, the 3Com PalmPilot synchronizes a personal computer based personal information management program with a PalmPilot handheld computer system. However, it would be desirable to have more than just two personal information storage systems synchronized such that a person could use a plurality of personal information systems concurrently.

### SUMMARY OF THE INVENTION

A database synchronization system is disclosed. In the database synchronization system, a synchronization database is created. The synchronization database stores a relative sent time that specifies when each database last attempted to send records to each other database, a relative receive time that specifies when each database last attempted to received records from each other database, and a relative record modified time that specifies when each record in each database was last created or modified.

The synchronization system operates by comparing each record modified time to the relative sent time and the relative receive time. Records are only sent from a first database to a second database if the relative record modified time for that record designates a later time than the relative sent time that specifies when the first database last sent records to the second database and the relative record modified time specifies an earlier time than the relative receive time that specifies the time the first database last received records from the second database.

Other objects, features, and advantages of present invention will be apparent from the company drawings and from the following detailed description.

### BRIEF DESCRIPTION OF THE DRAWINGS

The objects, features and advantages of the present invention will be apparent to one skilled in the art, in view of the following detailed description in which:

Figure 1 illustrates a systemic configuration in which the present invention can be practised.

Figure 2a illustrates a conceptual diagram of a global synchronization system comprising three applications that each store personal information.

Figure 2b illustrates a conceptual diagram of a distributed synchronization system comprising three applications that each store personal information.

Figure 3 illustrates a conceptual diagram of a system with two databases that need to be synchronized.

Figure 4a illustrates a conceptual diagram of a system with three databases being synchronized using the global synchronization system.

Figure 4b illustrates a conceptual diagram of a system with three databases being synchronized using the distributed synchronization system.

### DETAILED DESCRIPTION OF THE PREFERRED EMBODIMENT

A system for synchronizing information in multiple databases is disclosed. In the following description, for purposes of explanation, specific nomenclature is set forth to provide a thorough understanding of the present invention. However, it will be apparent to one skilled in the art that these specific details are not required in order to practice the present invention. For example, the present invention has been described with reference to personal information such as names, addresses and telephone numbers. However, the same techniques can easily be applied to any other type of information stored in databases.

### Multiple Personal Information Management Programs

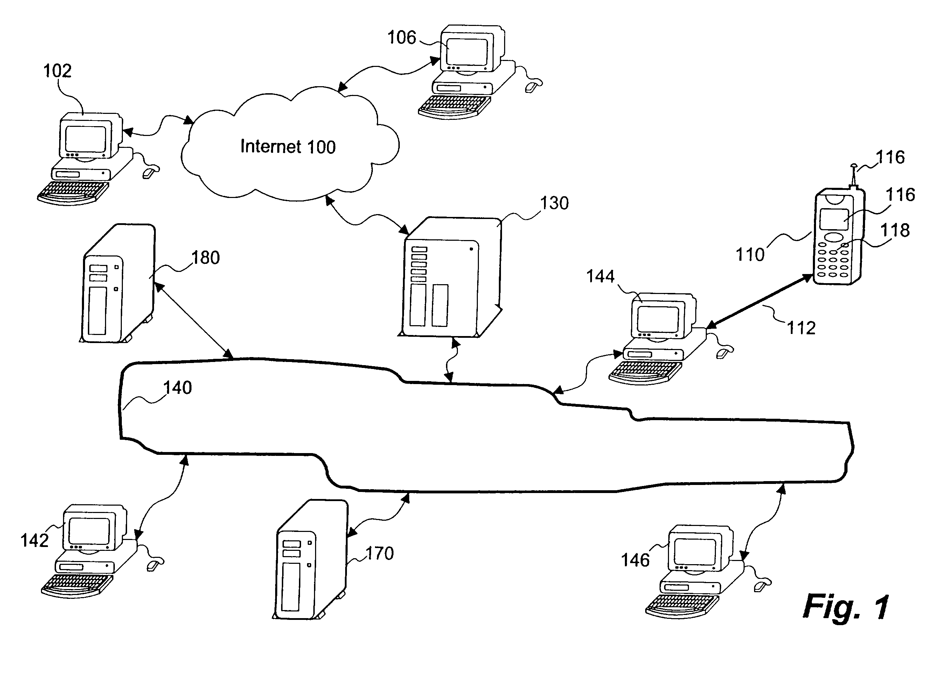

Figure 1 illustrates a personal computer system 144 coupled to a local area network 140. The user of the personal computer system 144 may use a particular personal information management (PIM) program that is provided by his Information Services (IS) department. The personal information management (PIM) program stores information such as telephone number & address lists, to-do lists, and a personal daily planner. However, to provide greater access the personal information, the user may also use other personal information management systems.

One commonly used personal information management system is handheld computer system 110 that contains application programs for storing and displaying personal information. Examples of handheld computer system 110 may include, but not be limited to, a mobile phone, a personal digital assistant (PDA), or a portable general purpose computer. A user may enter personal information into the handheld computer system 110 using a keypad 118. The handheld computer system 110 displays personal information on a flat panel display 116. In one embodiment, the handheld computer system 110 is a cellular telephone that includes an antenna 116 and communications electronics that allow the user to communicate voice and data across a wireless network.

To keep the personal information in the handheld computer system 110 current, the handheld computer system 110 may synchronize with a personal information management program on the personal computer system 144. The personal information management program on the personal computer system 144 may or may not be the personal information management program provided to the user by his Information Services (IS) department.

Another method of providing access to the user's personal information is to provide the user's personal information on to a personal inventory management program on an Internet or Intranet server 130. The Internet/Intranet server 130 in the example of Figure 1 is coupled to both the internal LAN 140 and the global Internet 100. Thus, any client system coupled to the internal LAN 140 or the global Internet 100 may access the user's personal information, such as stations 106, 102 and 142. To protect the user's personal information, the personal inventory management program on the Internet/lntranet server 130 should require authentication. The personal inventory management program on the Internet/lntranet server 130 provides the benefit of allowing the user to selectively share his personal information with other people that are on the internal LAN 140 or the global Internet 100.

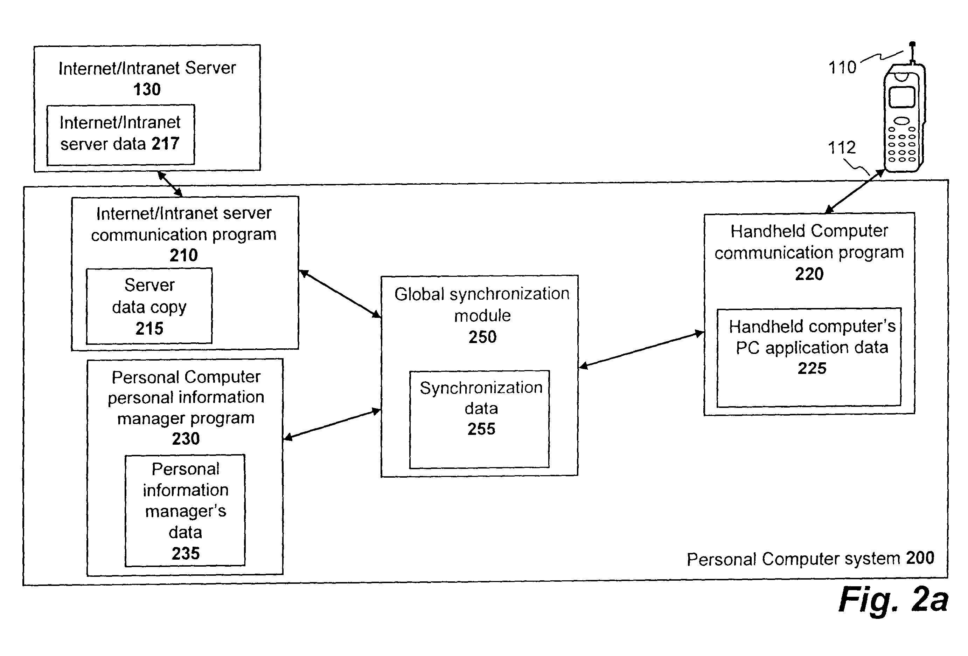

An active user may wish to use all three personal information management systems previously described. Figure 2a illustrates a conceptual diagram of three applications in a personal computer 200 that each store personal information: a personal computer information management program 230, an Internet/lntranet server communication program 210, and a handheld computer communication program 220.

The personal computer information management program 230 may be one of several personal information management programs such as Eudora Planner from Qualcomm, Organizer from Lotus, or Outlook Express from Microsoft. The personal computer information management program 230 maintains its own personal information database 235 for the personal computer 200.

The Internet/Intranet server communication program 210 may be one of several programs that store information on an Internet/lntranet server 130. For example Lotus Notes stores information on a Lotus Domino Server. Similarly, a synchronization program is provided by PlanetAll that stores personal information on a PlanetAll hosted Internet server. (See http://www.PlanetAll.com). The Internet/Intranet server communication program 210 may maintain its own personal information database 215 for Internet/lntranet server 130. Alternatively, the Internet/Intranet server communication program 210 may require data in a special input format or use an existing personal computer PIM program that is not the same as the personal computer information management program 230.

The handheld computer communication program 220 may be one of several programs that communicate with an external handheld computer system 110. Examples of communication programs for handheld computer systems include the Pilot Desktop from 3Com and Intellisync from Puma Technologies. The handheld computer communication program 220 may maintain its own personal information database 225 for the external handheld computer system 110.

Thus, as illustrated in the example of Figure 2a, a user may have three or more personal information databases that are being used. It would be desirable to keep the contents of all the personal information databases synchronized.

### Multiple Database Synchronization System

The present invention provides a system for keeping several different personal information databases synchronized. Two different embodiments are disclosed, although other variations exist.

### Global Synchronization System

Referring to Figure 2a, the present invention introduces a global synchronization module 250 that periodically accesses the different personal information databases 210, 220 and 230 and synchronizes them.

The global synchronization module 250 maintains its own synchronization database 255. The synchronization database 255 contains information about the various records stored within each database. Specifically, the synchronization database 255 notes when various records are copied or moved from one database to another. To prevent problems introduced by mismatched clocks on different computer systems, global synchronization modules 250 that use clock signals only use clock signals from the clock of the host system.

The synchronization database 255 stores an entry for each record in each personal information database. Specifically, each entry contains a time stamp for the time that the record was modified in that particular database. Furthermore, the synchronization database 255 contains (1) a time that each database last sent records to each other database; and (2) a time that each database last received records from each other database.

The synchronization database 255 may assign a unique record identifier to each unique database record. In one embodiment, corresponding records in different database may be assigned the same unique record identifier since the records are (or should be) the same in each database.

### Distributed Synchronization System

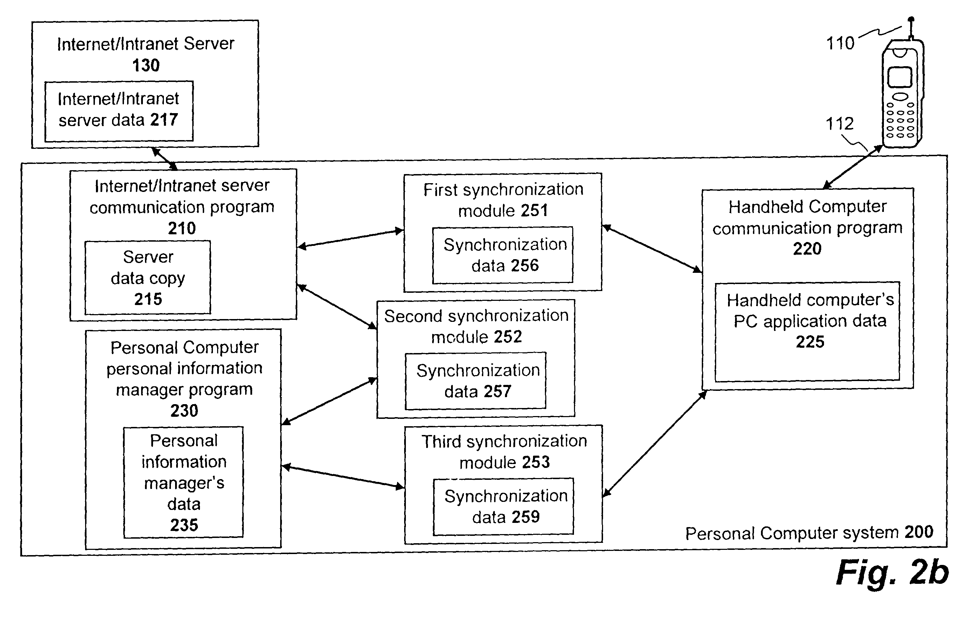

Figure 2b illustrates an alternate embodiment wherein different synchronization modules are used to synchronize different database pairs. Specifically, three different synchronization modules are illustrated. A first synchronization module 251 manages data synchronization between the database 215 for the Internet/Intranet server communication program 210 and the database 225 for the handheld computer communication program 220. A second synchronization module 252 manages data synchronization between the database 215 for the Internet/Intranet server communication program 210 and the database 235 for the personal computer personal information management program 230. The third synchronization module 253 manages data synchronization between the database 225 for the handheld computer communication program 220 and the database 235 for the personal computer personal information management program 230. In such an embodiment, each synchronization module 251, 252, and 253 maintains its own synchronization data 256, 257, and 259, respectively.

### A Simple Example

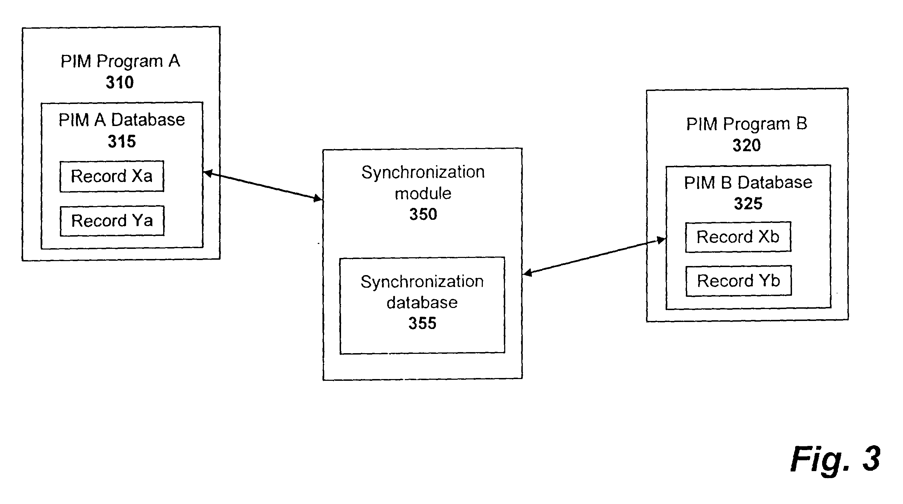

To describe a simple example of the operation of the multiple database system using the global synchronization system as illustrate in Figure 2a, a two-database example is provided with reference to the following table and Figure 3.

**Table 1**

| Database A | | | | Database B | | | |
|---|---|---|---|---|---|---|---|
| Record X1 modified | Record Y1 modified | In From B | Out To B | Record X2 modified | Record Y2 modified | In From A | Out To A |
| 1:00 PM | | | | | | | |
| 1:00 PM | | | | | 1:01 PM | | |
| 1:00 PM | | | | | 1:01 PM | 1:02 PM | |
| 1:00 PM | | | | 1:03 PM | 1:01 PM | 1:02 PM | |
| 1:00 PM | | | 1:04 PM | 1:03 PM | 1:01 PM | 1:02 PM | |
| 1:00 PM | | 1:05 PM | 1:04 PM | 1:03 PM | 1:01 PM | 1:02 PM | |
| 1:00 PM | 1:06 PM | 1:05 PM | 1:04 PM | 1:03 PM | 1:01 PM | 1:02 PM | |
| 1:00 PM | 1:06 PM | 1:05 PM | 1:04 PM | 1:03 PM | 1:01 PM | 1:02 PM | 1:07 PM |

The horizontal axis of Table 1 describes the contents of the synchronization database 355 used to control the synchronization of PIM A Database 315 in PIM program A 310 and PIM B Database 325 in PIM program A 320 illustrated in Figure 3. The vertical axis (i.e. n-th row) is used to describe the changes in the synchronization database 355 as records are changed and databases are synchronized.

The first column of Table 1 stores the time that a first record, Record X1, was modified in database A. The second column of Table 1 stores the time that a second record, Record Y1, was modified in database A. The next two columns of Table 1 describe respectively when Database A 315 received records from and sent records to Database B 325. Specifically, the third column specifies when Database A 315 last received records from Database B 325 and the fourth column specifies when Database A 315 last sent records to Database B 325.

The fifth column of Table 1 stores the time that a corresponding first record, Record X2, was modified in database B. The sixth column of Table 1 stores the time that a corresponding second record, Record Y2, was modified in database B 325. Note that these values may be null or even not exist yet if the database have never been synchronized as illustrated in Table 1. The seventh column specifies when Database B 325 last received records from Database A 315 and the fourth column specifies when Database B 325 last sent records to Database A 315.

Referring to the second row of Table 1, the synchronization database 355 is empty, i.e. no data or records have been entered. Then, at 1:00 p.m., a user adds Record X1 to database A 315 as noted in the third row of Table 1. Next, the user adds Record Y2 to database B 325 at 1:01 p.m. as specified in the fourth row of Table 1. At this point each database contains one record. The two created records are not synchronized and thus can not be fully accessed from either one of the databases.

A synchronization is initiated and begins by having database A 315 send records to database B 325. (Later, database B 325 will send records to database A 315.) The synchronization database 355 notes that database B 325 begins receiving records from database A 315 at 1:02 p.m., as reflected in fifth row of Table 1. Each record in database A 315 is examined and will be sent to database B 325 only if two conditions are satisfied: (1) the record modified time in database A must be greater than the last time that records were sent to database B; and (2) the record modified time in database A must be less than the last time this database received records from database B. The record modified time in database A must be greater than the last time that records were sent to database B so that only modified records are being sent. The record modified time in database A must be less than the last time this database received records from database B in order to prevent records that were just received from database B from being retransmitted back to the database B. Since X1 has never been sent to database B 325, the modified time is greater than the last sent time. To simplify an implementation, newly created records can be given the oldest possible time that may be set with the field. Thus record X1 is created as record X2 in database B 325 and the last modified time is set to 1:03 p.m. in the sixth row of Table 1.

Since X1 was the only record in database A 315, database A 315 is done sending records. The synchronization module 350 notes the end of sending records from database A 315 to database B 325 in the synchronization database 355. Specifically, the seventh row of Table 1 notes 1:04 p.m. as the finishing time of sending records to database B 325.

Database B 325 then begins sending records to database A 315. The synchronization module 350 notes the beginning of receiving records into database A 315 from database B 325 in the synchronization database 355. Specifically, the eighth row of Table 1 notes 1:05 p.m. as the time database A 315 begins receiving records from database B 325.

The synchronization module 350 then proceeds to send records from database B 325 to database A 315. As before, records are only sent if the record modified time in database B is greater than the last time that records were sent to database A and the record modified time in database B must be less than the last time this database received records from database A.

When the synchronization module 350 examines record Y2 in database B 325, the synchronization module 350 will sent record Y2 to Database A since record Y2 was modified after records were last sent to database A 315 (1:01 p.m. is greater than never) and record Y2 was modified before the last time records were received from database A (1 :01 p.m. is less than 1:02 p.m.). Thus, a new corresponding record Y1 is created in database A 315. The new Y1 record is given the current time as the modified time. In this example, 1:06 p.m. is assigned as the modified time in the ninth row of Table 1.

When the synchronization module 350 examines record X2 in database B 325, the synchronization module 350 will not sent record X2 to Database A 315. Record X2 is not sent to database A 315 since the record fails the second part of the test. Specifically, record X2 was not modified before the last time records were received from database A 315 (1:03 p.m. is not less than 1:02 p.m.). Thus, record X2 is not sent to database A 315. This makes sense since database B 325 just received record X2 from database A 315 and has not modified it.

Finally, since X2 and Y2 were the only record in database B 325, database B 325 is done sending records to database A 315. The synchronization module 350 notes the end of sending records from database A 315 to database B 325 in the synchronization database 355. Specifically, the tenth row of Table 1 notes 1:07 p.m. as the finishing time of sending records to database B 325.

### Mismatched clocks

Clocks in various different computer systems are usually not precisely synchronized. For example, referring to Table 2 below, the clocks may be completely out of phase.

**Table 2**

| Database A | | | | Database B | | | |
|---|---|---|---|---|---|---|---|
| Record X1 modified | Record Y1 modified | In From B | Out To B | Record X2 modified | Record Y2 modified | In From A | Out To A |
| 1:00 PM | | | | | | | |
| 1:00 PM | | | | | 2:01 PM | | |
| 1:00 PM | | | | | 2:01 PM | 2:02 PM | |
| 1:00 PM | | | | 2:03 PM | 2:01 PM | 2:02 PM | |
| 1:00 PM | | | 1:04 PM | 2:03 PM | 2:01 PM | 2:02 PM | |
| 1:00 PM | | 1:05 PM | 1:04 PM | 2:03 PM | 2:01 PM | 2:02 PM | |
| 1:00 PM | 1:06 PM | 1:05 PM | 1:04 PM | 2:03 PM | 2:01 PM | 2:02 PM | |
| 1:00 PM | 1:06 PM | 1:05 PM | 1:04 PM | 2:03 PM | 2:01 PM | 2:02 PM | 2:07 PM |

The example of Table 2 will still work properly since only clock values recorded from the local clock domain are used in comparisons.

As set forth in the previous examples, actual times may be used when database records are modified, sent, and received. However, the absolute times are not important. Thus, the system of the present invention could instead be implemented with a version counter that changes after each step that is performed. For example, referring to the previous examples, the times could be replaced with an incrementing counter value (100, 101, 102, 103, etc)

Thus, the exact time when a record changes is not necessary. The important fact to know is if a record has changed before or after a particular synchronization. Referring to Figure 3, the synchronization module 350 may not be able to obtain the exact time when a particular record has changed from a database. In fact, the synchronization module 350 may not be informed when a record changes. Instead, the synchronization module 350 may store a copy of each database after a synchronization. Then, when a synchronization is initiated, the synchronization module 350 first compares the stored database with the changed database to determine which records have been modified. The current time or an incremented counter will be stored into the modified records' modified time field in the synchronization database 355.

### A Three Database Example

The synchronization system of the present invention can be extended to multiple database. The following table, Table 3, illustrates an example of a multiple database synchronization. To simplify the example, only a single database record will be considered.

**Table 3**

| Database A | | | | | Database B | | | | | Database C | | | | |
|---|---|---|---|---|---|---|---|---|---|---|---|---|---|---|
| Rec Xa mod | In from B | Out to B | In from C | Out to C | Rec Xb mod | In from A | Out to A | In from C | Out to C | Rec Xc mod | In from A | Out to A | In from B | Out to B |
| 1:00 | | | | | | | | | | | | | | |
| 1:00 | | | | | | 1:01 | | | | | | | | |
| 1:00 | | | | | 1:02 | 1:01 | | | | | | | | |
| 1:00 | | 1:03 | | | 1:02 | 1:01 | | | | | | | | |
| 1:00 | 1:04 | 1:03 | | | 1:02 | 1:01 | | | | | | | | |
| 1:00 | 1:04 | 1:03 | | | 1:02 | 1:01 | 1:05 | | | | | | | |
| 1:00 | 1:04 | 1:03 | | | 1:02 | 1:01 | 1:05 | | | | | | 1:06 | |
| 1:00 | 1:04 | 1:03 | | | 1:02 | 1:01 | 1:05 | | | 1:07 | | | 1:06 | |
| 1:00 | 1:04 | 1:03 | | | 1:02 | 1:01 | 1:05 | | 1:08 | 1:07 | | | 1:06 | |
| 1:00 | 1:04 | 1:03 | | | 1:02 | 1:01 | 1:05 | 1:09 | 1:08 | 1:07 | | | 1:06 | |
| 1:00 | 1:04 | 1:03 | | | 1:02 | 1:01 | 1:05 | 1:09 | 1:08 | 1:07 | | | 1:06 | 1:10 |
| 1:00 | 1:04 | 1:03 | 1:11 | | 1:02 | 1:01 | 1:05 | 1:09 | 1:08 | 1:07 | | | 1:06 | 1:10 |
| 1:00 | 1:04 | 1:03 | 1:11 | | 1:02 | 1:01 | 1:05 | 1:09 | 1:08 | 1:07 | | 1:12 | 1:06 | 1:10 |
| 1:00 | 1:04 | 1:03 | 1:11 | | 1:02 | 1:01 | 1:05 | 1:09 | 1:08 | 1:07 | 1:13 | 1:12 | 1:06 | 1:10 |
| 1:00 | 1:04 | 1:03 | 1:11 | 1:14 | 1:02 | 1:01 | 1:05 | 1:09 | 1:08 | 1:07 | 1:13 | 1:12 | 1:06 | 1:10 |

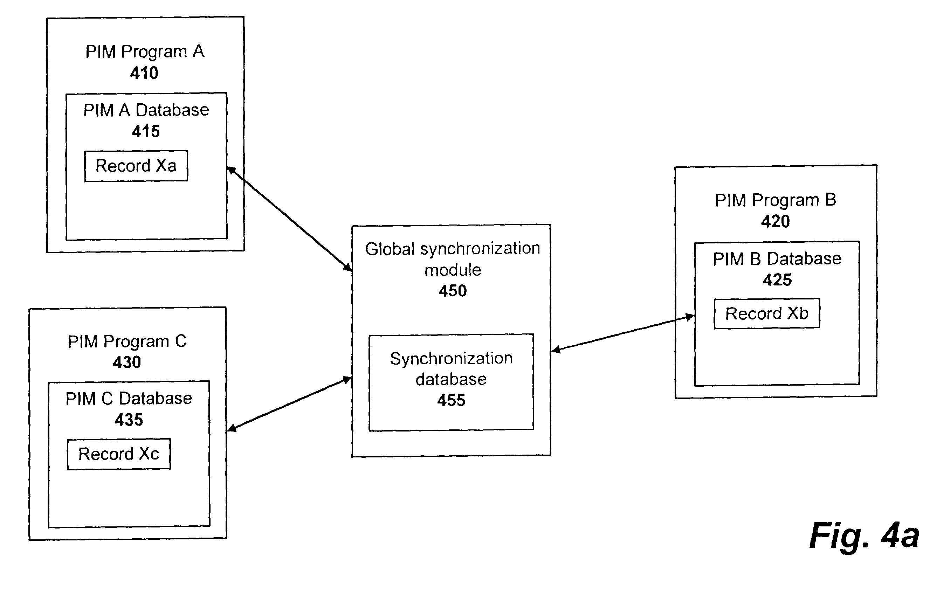

The horizontal axis of Table 3 describes the contents of the synchronization database 455 used to control the synchronization of PIM A Database 415 in PIM program A 410 and PIM B Database 425 in PIM program A 420 illustrated in Figure 4a. The vertical axis is used to describe the changes in the synchronization database 455 as one record is entered and then the databases are synchronized.

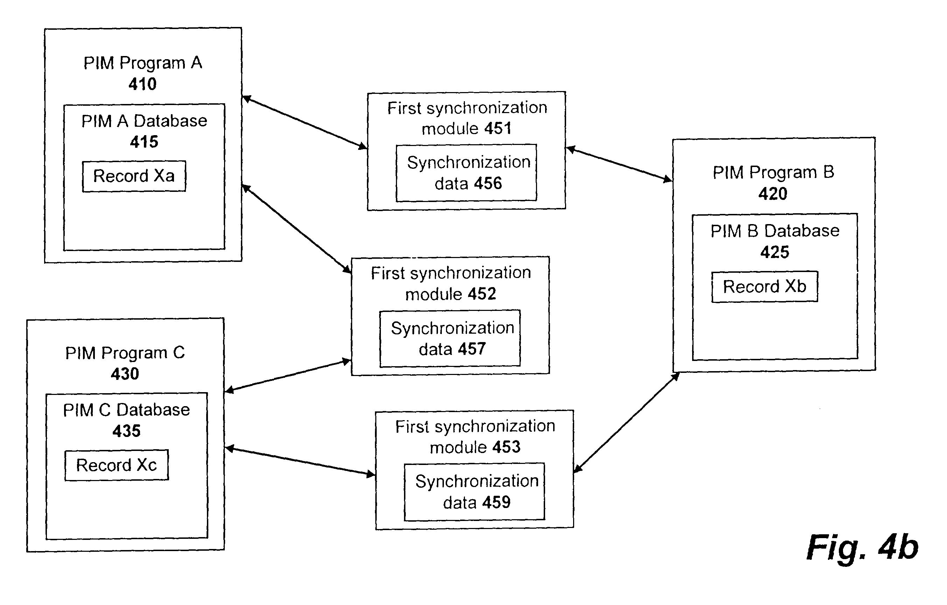

In a distributed synchronization module environment, as illustrated in Figure 4b, the synchronization database of Table 3 would be split into three different databases, one for each synchronization module. Specifically, synchronization data 456 would contain the data transactions from A to B and B to A, synchronization data 457 would contain the data transactions from A to C and C to A, and synchronization data 459 would contain the data transactions from C to B and B to C.

Referring back to the global synchronization embodiment of Figure 4a, the first five columns of Table 3 (synchronization data 455) store a Record Xa in database A, the time when Database A 415 last received records from Database B 425, the last time when Database A 415 last sent records to Database B 425, the time when Database A 415 last received records from Database C 435, and the last time when Database A 415 last sent records to Database C 435.

The middle five columns of Table 3 store a Record Xb in database B 425, the time when Database B 425 last received records from Database A 415, the last time when Database B 425 last sent records to Database A 415, the time when Database B 425 last received records from Database C 435, and the last time when Database B 425 last sent records to Database C 435.

The last five columns of Table 3 store a Record Xc in database C 435, the time when Database C 435 last received records from Database A 415, the last time when Database C 435 last sent records to Database A 415, the time when Database C 435 last received records from Database B 425, and the last time when Database C 435 last sent records to Database B 425.

The vertical axis of the Table 3 sets forth a three-database synchronization example. Referring to the second row of Table 3, the synchronization database 355 is empty, namely no data or records are entered. Then, at 1:00 p.m., a user adds Record Xa to database A 415 as rioted in the third row of Table 3.

Next, a synchronization is initiated between databases A and B. The synchronization may be user initiated or automatically initiated. The synchronization begins by having database A 415 send records to database B 425. The synchronization database 455 notes that database B 425 begins receiving records from database A 415 at 1:01 p.m., as reflected in fourth row of Table 3. Each record in database A 415 is examined and will be sent to database B 425 only if two conditions are satisfied: (1) the record modified time in database A must be greater that the last time that records were sent to database B; and (2) the record modified time in database A must be less than the last time this database received records from database B. Since Xa has never been sent to database B 425, the modified time is greater than the last sent time (never). Thus record Xa is created in database B 425 as record Xb and the last modified time is set to 1:02 p.m. in the fifth row of Table 3.

Since Xa was the only record in database A 415, database A 415 is done sending records. The synchronization module 450 notes the end of sending records from database A 415 to database B 425 in the synchronization database 455. Specifically, the sixth row of Table 3 notes 1:03 p.m. as the finishing time of sending records to database B 425.

Database B 425 then begins sending records to database A 415. The synchronization module 450 notes the beginning of receiving records into database A 415 from database B 425 in the synchronization database 455. Specifically, the seventh row of Table 1 notes 1:04 p.m. as the time database A 415 begins receiving records from database B 425. The synchronization module 450 then proceeds to send records from database B 425 to database A 415. As before, records are only sent if the record modified time in database B is greater that the last time that records were sent to database A and the record modified time in database B is less than the last time this database received records from database A 415. However, since the only record in database B 425 is record Xb that was created after records were received from database A 415, no records will be sent from database B 425. Thus, the synchronization module 450 notes the end of sending records to database A from database B at 1:05 p.m. as designated in the eighth row of Table 3.

Next, a synchronization is initiated between databases B and C. Again, the synchronization may be user initiated or automatically initiated. The synchronization begins by having database B 425 send records to database C 435. The synchronization module 450 notes that database C 435 begins receiving records from database B 425 at 1:06 p.m., as reflected in ninth row of Table 3. Each record in database B 425 is examined and will be sent to database C 435 only if two conditions are satisfied: (1) the record modified time in database B must be greater that the last time that records were sent to database C; and (2) the record modified time in database B must be less than the last time this database received records from database C. Since Xb in database B 425 has never been sent to database C 435, the modified time is greater than the last sent time (never). Thus record Xb is created in database C 435 as record Xc and the last modified time is set to 1:07 p.m. in the tenth row of Table 3. Since record Xb is the only record in database B 425, the synchronization module 450 notes the end time of sending records to database C from database B at 1:08 p.m. in the eleventh row of Table 3.

After the synchronization module 450 has finished sending records from database B to database C, the synchronization module 450 begins to send records from database C to database B. In the twelfth row of Table3, the synchronization module 450 notes the beginning of database B receiving records from database C at 1:09 p.m. Since no records need to be sent (Record Xc was created after receiving from database B), the synchronization module 450 notes 1:10 p.m. as the time when done sending records from database C to database B in the thirteenth row of Table 3.

Next, a synchronization is initiated between databases A and C. The synchronization begins by having database C 435send records to database A 415. The synchronization module 450 notes that database A 415 begins receiving records from database C 435 at 1:11 p.m., as reflected in fourteenth row of Table 3. Each record in database C 435 is examined and will be sent to database A 415 only if two conditions are satisfied: (1) the record modified time in database C must be greater that the last time that records were sent to database A; and (2) the record modified time in database C must be less than the last time this database received records from database A. Since Xc in database C 435 has never been sent to database A 415, the modified time is greater than the last sent time (never). Thus record Xc is send to database A 415. However, database A 415 compares the received record with existing records to determine if the received record is a duplicate record. When database A 415 compares the newly received record (record Xc) with the existing record Xa, database A 415 will determine that the records are exact duplicates. Thus, database A 415 will discard the newly received record since it already has that record.

Since record Xc is the only record in database C 435, the synchronization module 450 notes the end time of sending records to database A from database C at 1:12 p.m. in the fifteenth row of Table 3. The synchronization module 450 then begins to send records from database A to database C. In the sixteenth row of Table 3, the synchronization module 450 notes the beginning of database C receiving records from database A at 1:13 p.m. When the synchronization module 450 examines record Xc, the synchronization module 450 will attempt to send the record as it was modified since database A last sent records to database C (never) and Xa was modified before receiving records from database C. However, when database C receives the record, database C will discard the record since record Xa exactly matches the existing Xc message. Finally, the synchronization module 450 notes the end of sending messages from database A to database C at 1:14 in the seventeenth row of Table 3.

### Double Modify Resolution

A double modify situation occurs when the synchronization module detects that a record has been either added or modified in both databases. For example, consider the following case:
1. The user adds record Xa to Database A.
2. Database A synchronizes with Database B.
3. Database A synchronizes with Database C.
4. Database B synchronizes with Database C.
In the second and third steps of this example, Record Xa is added in both Database B and Database C. Even if the accurate time that each record had been added or modified was known, that may not be the right information to use to decide which record to keep and which to discard. The prior art procedure for handling such situations has been to add both records to both databases, so that you end up with twice as many records. This will be undesirable for the synchronization system of the present invention because in the situation outlined above, all records would be duplicated. To put it more simply, when two databases sync for the first time, if the two databases have each synced with a third database in the past, there will be a lot of record duplication. To handle such cases, exact duplicate records could be deleted and user input could be used to resolve the remainder of such cases. 0 The following steps describe one possible method of handling the situation when a double modify or add is detected:
1. Compare the content of the records. If the records are exact duplicates, discard the record, otherwise:
2. If any rules have been chosen by the user then use those rules, otherwise:
3. Query the user, giving the user the options to:
   a) Specify which database "wins" for this record.
   b) Specify which database "wins" for all records in this synchronization.
   c) Not synchronize this record.
   d) Not synchronize any conflicting records.
   e) Duplicate these records.
   f) Duplicate all conflicting records.

The foregoing has described a system of synchronizing multiple databases. It is contemplated that changes and modifications may be made by one of ordinary skilled in the art, to the materials and arrangements of elements of the present invention without departing from the scope of the invention.

## Claims

1. A method of synchronizing multiple databases, said method comprising:-
storing a first record in a first database;
initiating a synchronization between said first database and a second database; and
sending said first record to said second database if said first record was created or modified after last sending records from said first database to said second database and said first record was created or modified before last receiving records from said second database into said first database.

2. A method as claimed in claim 1 further comprising:-
discarding said first record from said second database if an identical matching record already exists in said first database.

3. A method as claimed in claim 1 or 2 further comprising:-
sending a second record in said second database to said first database if said second record was created or modified after last sending records from said second database to said first database and said second record was created or modified before last receiving records from said first database into said second database.

4. A method as claimed in any preceding claim further comprising:-
initiating a synchronization between said first database and a third database; and
sending said first record to said third database if said first record was created or modified after last sending records from said first database to said third database and said first record was created or modified before last receiving records from said third database into said first database.

5. A method as claimed in any one of claims 1 to 3 further comprising:-
initiating a synchronization between said second database and a third database; and
sending said first record from said second database to said third database if said first record was created or modified after last sending records from said second database to said third database and said first record was created or modified before last receiving records from said third database into said second database.

6. A synchronization system for synchronizing records in a first database and a second database, said system comprising:-
a synchronization database, said synchronization database comprising:-
a relative first database to second database value, said relative first database to second database value storing a first relative time value specifying when a first database last attempted to send records to a second database;
a relative first database from second database value, said relative first database from second database value storing a second relative time value specifying when said first database last attempted to receive records from said second database;
at least one record modified value, each record modified value corresponding to each record in each database, said record modified value storing a third relative time value that specifies when said corresponding record was created or modified; and
a synchronization module; said synchronization module sending a first record from said first database to said second database if a first record modified value corresponding to said first record designates a later time than said relative first database to second database value and said first record modified value designates an earlier time than said relative first database from second database value.

7. A synchronization system as claimed in claim 6 wherein said synchronization database further comprises:-
a relative second database to first database value, said relative second database to first database value storing a fourth relative time value specifying when a second database last attempted to send records to a first database; and
a relative second database from first database value, said relative second database from first database value storing a fifth relative time value specifying when said second database last attempted to receive records from said first database;
wherein said synchronization module sends a second record from said second database to said first database if a second record modified value corresponding to said second record designates a later time than said relative second database to first database value and said second record modified value designates an earlier time than said relative second database from first database value.

8. A method of synchronizing multiple databases, said method comprising:-
initiating a synchronization among said multiple databases, said multiple databases comprising at least two database, a first database and a second database;
examining a first record in said first database to determine if said first record was created or modified after a last time said first database sent records to said second database and before a last time said first database received records from said second database; and
sending a copy of said first record to said second database when said first record was created or modified after the last time said first database sent records to said second database and before the last time said first database received records from said second database.

9. A method as claimed in claim 8 further comprising:-
examining a second record in said second database to determine if said second record was created or modified after a last time said second database sent records to said first database and before a last time said second database received records from said first database;
sending a copy of said second record to said first database when said second record was created or modified after a last time said second database sent records to said first database and before a last time said second database received records from said first database;
recording a third value in said second database to identify that said copy of said second record has been sent to said first database; and
recording a fourth value in said first database to identify that said copy of said second record has been received from said second database.

10. A synchronization system for synchronizing multiple databases, said system comprising:-
a data storage device for a first database and a second database;
a memory for a synchronization module;
a processor coupled to said memory and said data storage device, the processor causing said synchronization module to:-
examine a first record in said first database to determine if said first record was created or modified after a last time said first database sent records to said second database and before a last time said first database received records from said second database;
send a copy of said first record to said second database when said first record was created or modified after the last time said first database sent records to said second database and before the last time said first database received records from said second dataoase;
examine a second record in said second database to determine if said second record was created or modified after a last time said second database sent records to said first database and before a last time said second database receive records from said first database; and
send a copy of said second record to said first database when said second record was created or modified after a last time said second database sent records to said first database and before a last time said second database receive records from said first database.
